# EUROPEAN PATENT SPECIFICATION

(11) **EP 4 398 409 B1**
(45) Date of publication and mention of the grant of the patent: **28.10.2026**
(21) Application number: 22864974.5
(22) Date of filing: 29.08.2022
(51) Int. Cl.: H01M 50/557, H01M 50/564, H01M 50/531, H01M 10/04, H01M 50/536

(54) **LEAD SUPPLY SYSTEM AND CONTROL METHOD THEREFOR**
BLEIZUFUHRSYSTEM UND STEUERUNGSVERFAHREN DAFÜR
SYSTÈME D'ALIMENTATION EN FIL ET PROCÉDÉ DE COMMANDE ASSOCIÉ

(30) Priority: 02.09.2021 KR 20210117116
(43) Date of publication of application: 10.07.2024
(73) Proprietor: LG Energy Solution, Ltd., Seoul 07335 (KR)
(72) Inventor: BAEK, Ju Hwan, Daejeon 34122 (KR); CHOI, Won Seok, Daejeon 34122 (KR); OH, Duk Keun, Daejeon 34122 (KR); LEE, Seung Bae, Daejeon 34122 (KR); HONG, Seok In, Daejeon 34122 (KR); HWANG, Seung Jin, Daejeon 34122 (KR)
(74) Representative: Goddar, Heinz J.
(86) International application number: PCT/KR2022/012856
(87) International publication number: WO 2023/033472

(56) References cited:
- KR-A- 20120 084 316
- KR-A- 20150 045 168
- KR-A- 20150 055 190
- KR-A- 20150 055 190
- KR-A- 20190 092 588
- KR-A- 20210 006 231
- KR-B1- 102 081 671
- KR-B1- 102 081 671
- US-A1- 2013 011 717

## Description

### TECHNICAL FIELD

### TECHNICAL FIELD

The present invention relates to a lead supply system and a method for controlling the same, and more particularly, to a lead supply system, which supplies a lead so as to be connected to an electrode tab provided in a cell, and a method for controlling the lead supply system.

### BACKGROUND ART

US 2013 / 0011717 A1 relates to a battery having an electrode stacked body in which a plurality of electrode plates are stacked (for example, a stack-type secondary battery) and an ultrasonic welding system used in producing of the battery. KR 20150055190 A relates to lead tabs, and more particularly, to a lead tab manufacturing apparatus capable of allowing lead tabs to be manufactured by an automated process.

KR 102081671 B1 relates to a two-row automatic inspection system for a lead tab for a secondary battery. KR 2015 0045168 A relates to a fusion device for fusion welding the electrode lead for a protective film.

In general, secondary batteries refer to batteries that are chargeable and dischargeable unlike non-rechargeable primary batteries, and are widely used in electronic devices such as mobile phones, notebook computers, and camcorders, or electric vehicles, etc. In particular, a lithium secondary battery has a larger capacity and a higher energy density per unit weight than a nickel-cadmium battery or a nickel-hydrogen battery, and thus utilization thereof is on a rapidly increasing trend.

The lithium secondary battery may be also classified according to the configuration of an electrode assembly in a positive electrode/separator/negative electrode structure. Representative examples may include a jelly-roll-type electrode assembly in a configuration where long sheet-shaped positive electrodes and negative electrodes are wound with a separator interposed therebetween, a stacked type electrode assembly in which a plurality of positive and negative electrodes cut into units having a predetermined size are stacked in sequence with a separator interposed therebetween, and a stacked/folded type electrode assembly in a configuration where bi-cells or full-cells are wound which have positive and negative electrodes in a predetermined unit stacked with a separator interposed therebetween, and so on.

Recently, a secondary battery cell, which has a structure in which the stacked type or stacked/folded type electrode assembly is embedded in a pouch type battery case made of an aluminum laminate sheet, attracts a lot of interest for reasons such as low manufacture cost, small weight, and easy change in shape, and use thereof also gradually increases.

In such a lithium secondary battery, a lithium-based oxide and a carbon material are mainly used as a positive electrode active material and a negative electrode active material, respectively. The lithium secondary battery is provided with an electrode assembly, in which a plurality of electrodes coated respectively with the electrode active materials are disposed with a separator therebetween, and an exterior material which seals and accommodates the electrode assembly together with an electrolyte.

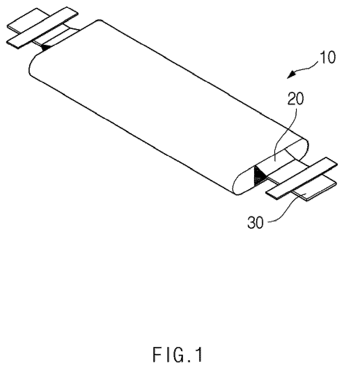

FIG. 1 is a perspective view of a general electrode assembly.

An electrode assembly 10 is provided with a plurality of electrode tabs 20 extending from a plurality of electrodes, and each of the plurality of electrode tabs 20 is bonded to a lead 30 by welding. Here, the plurality of electrode tabs 20 may include a plurality of positive electrode tabs extending from a plurality of positive electrodes, and a plurality of negative electrode tabs extending from a plurality of negative electrodes. The lead 30 connected to the plurality of positive electrode tabs may be a positive electrode lead, and the lead 30 connected to the plurality of negative electrode tabs may be a negative electrode lead. FIG. 1 illustrates the electrode assembly 10 in which the positive electrode tab and the negative electrode tab protrude in opposite directions. However, the electrode assembly 10 is not limited thereto, and may also have a configuration in which the positive electrode tab and the negative electrode tab protrude in the same direction.

A process of bonding the electrode tab 20 to the lead 30 includes supplying the lead 30 to a position at which the lead 30 is connected to the electrode tabs 20, and welding the electrode tab 20 to the lead 30 at the position.

In this regard, according to the related art, when the dimension or type of the lead 30 changes, a worker manually adjusts settings, etc., of equipment so as to supply the lead 30 at a predetermined position in the supplying of the lead 30. However, there is a limit to such adjustment in that accuracy is reduced and it needs to be performed in a state in which the equipment is stopped.

### DISCLOSURE OF THE INVENTION

### TECHNICAL PROBLEM

An object of the present invention for solving the above problems is to provide a lead supply system, which automatically accurately aligns the lead so as to be connected to an electrode tab, and a method for controlling the lead supply system.

### TECHNICAL SOLUTION

The present invention is defined according to the claims.

A lead supply system according to an embodiment of the present invention supplies the lead so as to be connected to an electrode tab. The lead supply system includes: a seating part on which the lead is seated; a vision sensor that photographs the lead at an upper side of the seating part; an alignment mechanism that adjusts the seating part so as to align the lead on the basis of vision data photographed by the vision sensor; and a supply device that picks up the lead from the seating part so as to supply the lead to a position at which the lead is connected to the electrode tab.

The lead supply system may further include a collecting box in which the lead is collected by the supply device when the lead is determined as a defect or inappropriateness on the basis of the vision data.

The alignment mechanism may include a rotation motor, which is disposed below the seating part and rotates the seating part around a vertical axis, and an orthogonal robot which moves the rotation motor horizontally in first and second directions perpendicularly crossing each other.

The alignment mechanism may move the seating part between a standby position disposed below the vision sensor and a supply position spaced apart from the standby position in the first direction. The supply device may pick up the lead when the seating part is disposed at the supply position.

The supply device may include a gripper that holds the lead, and an orthogonal robot that moves the gripper in a second direction perpendicularly crossing the first direction and in a vertical direction.

The lead supply system may further include a loading device that loads the lead on the seating part when the seating part is disposed at the standby position.

The loading device may include an adsorption part that adsorbs the lead at an upper side, an elevation actuator that elevates the adsorption part, and a uniaxial actuator that moves the elevation actuator horizontally.

The lead supply system may further include at least one of an overhead light unit, which emits light onto the lead from above the seating part, or a backlight unit provided in the seating part or disposed below the seating part.

The lead supply system may further include a concentrative light unit that is provided toward the seating part and concentratively emits light onto a partial area on the lead.

A method for controlling a lead supply system according to an embodiment of the present invention includes: a loading process of loading the lead on a seating part; a sensing process of photographing the lead on the seating part by a vision sensor; an alignment process of adjusting the seating part to align the lead on the basis of vision data photographed by the vision sensor; and a supply process of picking up the lead from the seating part to move the lead to a position at which the lead is connected to the electrode tab.

The method may further include a collection process of picking up and collecting the lead when the lead is determined as a defect or inappropriateness on the basis of the vision data.

The method may further include a moving process of moving the seating part in a first direction between the alignment process and the supply process.

The supply process may include picking up the lead seated on the seating part by a gripper, and moving the gripper horizontally in a second direction perpendicularly crossing to the first direction.

The sensing process may be performed in a state in which light is emitted toward the lead.

### ADVANTAGEOUS EFFECTS

According to the preferred embodiments of the present invention, the seating part is adjusted to align the lead on the basis of the vision data photographed by the vision sensor. Accordingly, the lead is supplied at the predetermined position at which the lead is connected to the electrode tab, and the quality of the electrode assembly may be improved.

Even when the specification, etc., of the lead to be stocked changes, the alignment of the lead may be automatically performed without stopping the equipment. Accordingly, the productivity of the electrode assembly may increase.

When the lead is determined as a defect or inappropriateness on the basis of the vision data photographed by the vision sensor, the lead may be collected but not supplied. Accordingly, the quality of the electrode assembly may be further improved.

In addition, the effects may be included which could be easily predicted by those skilled in the art from the configurations according to the preferred embodiments of the present invention.

### BRIEF DESCRIPTION OF THE DRAWINGS

FIG. 1 is a perspective view of a general electrode assembly.
FIG. 2 is a schematic diagram of a lead supply system according to an embodiment of the present invention.
FIG. 3 is a control block diagram of the lead supply system according to an embodiment of the present invention.
FIG. 4 is a flowchart of a method for controlling a lead supply system according to an embodiment of the present invention.
FIGS. 5 to 9 are views for explaining operations of the lead supply system according to an embodiment of the present invention.
FIG. 10 is a view for explaining a lead supply system according to another embodiment of the present invention.

### MODE FOR CARRYING OUT THE INVENTION

Hereinafter, preferred embodiments of the present invention will be described in detail with reference to the accompanying drawings so as to enable those skilled in the art to which the present invention pertains to easily carry out the present invention. The present invention may, however, be embodied in different forms and should not be construed as limited by the embodiments set forth herein.

The parts unrelated to the description, or the detailed descriptions of related well-known art that may unnecessarily obscure subject matters of the present invention, will be ruled out in order to clearly describe the present invention. Like reference numerals refer to like elements throughout the whole specification.

Moreover, terms or words used in this specification and claims should not be restrictively interpreted as ordinary meanings or dictionary-based meanings, but should be interpreted as meanings and concepts conforming to the scope of the present invention on the basis of the principle that an inventor can properly define the concept of a term to describe his or her invention in the best ways.

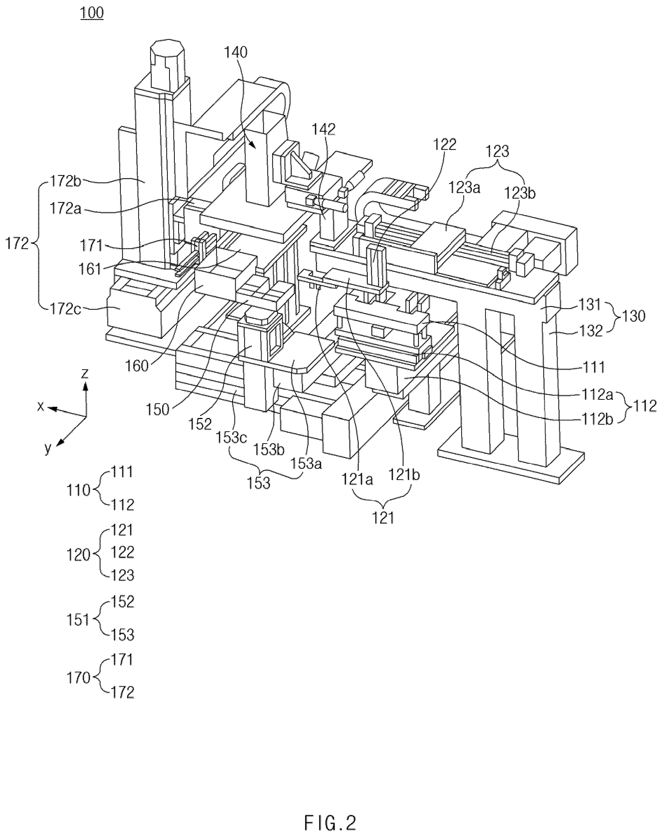

FIG. 2 is a schematic diagram of a lead supply system according to an embodiment of the present invention.

Hereinafter, for convenience of explanation, a direction parallel to an X-axis in FIG. 2 is called a first direction, and a direction parallel to a Y-axis is called a second direction. A Z-axis is parallel to a vertical direction and thus, the first direction and the second direction may be horizontal directions perpendicularly crossing each other.

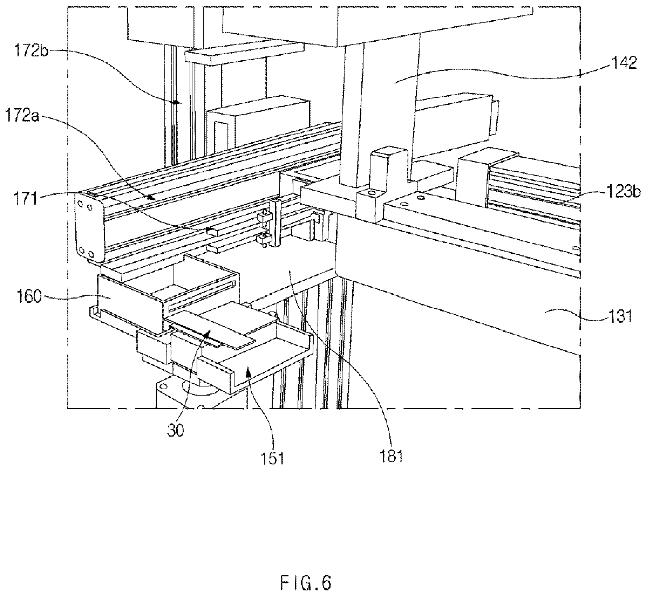

A lead supply system 100 according to an embodiment of the present invention includes a seating part 150 on which a lead 30 (see FIG. 6) is seated, a vision sensor 140 disposed above the seating part 150, an alignment mechanism 151 that adjusts the seating part 150 so as to align the lead 30, and a supply device 170 that picks up the lead 30 from the seating part 150 so as to supply the lead to a preset position.

The lead supply system 100 may further include a loading device 120 that loads the lead 30 on the seating part 150, and a supply buffer 110 that supplies the lead 30 to the loading device 120.

Hereinafter, for convenience of explanation, each of components of the lead supply system 100 will be described according to the transfer order of the lead 30.

The supply buffer 110 may sequentially supply the lead 30 manufactured in a previous process. Here, the lead 30 may be provided in a state in which an insulation film for post-sealing with a pouch type battery case (not shown) is attached to a portion of a circumference of the lead 30.

In more detail, the supply buffer 110 may include a table 111 on which the lead 30 is seated, and a uniaxial actuator 112 that moves the table 111.

The table 111 may be horizontally provided, and at least one lead 30 may be seated on a top surface of the table 111.

The uniaxial actuator 112 may move the table 111 horizontally in the second direction. In more detail, the uniaxial actuator 112 may include a base 112a coupled to a lower side of the table 111, and a guide 112b that guides movement of the base 112a and extends in the second direction. Thus, the table 111 may move in the second direction together with the base 112a. The detailed configuration and operation of the uniaxial actuator 112 are the well-known art and thus, the detailed description thereof will be omitted.

The table 111 may reciprocate, by the uniaxial actuator 112, between an initial position at which the lead 30 is seated, and a supply position spaced apart from the initial position in the second direction. The supply position may be below the loading device 120 to be described later. FIG. 2 illustrates a state in which the table 111 is disposed at the supply position.

Thus, when the table 111 is disposed at the initial position, the lead 30 may be seated on the table 111, and when the table 111, on which the lead 30 is seated, moves to the supply position by the uniaxial actuator 112, the loading device 120 may pick up the lead 30 seated on the table 111 so as to load the lead 30 on the seating part 150.

The loading device 120 may be supported by a support frame 130 so as to be disposed above the supply buffer 110.

The loading device 120 may include an adsorption part 121 that adsorbs the lead 30 at an upper side, an elevation actuator 122 that elevates the adsorption part 121, and a uniaxial actuator 123 that moves the elevation actuator 122.

The adsorption part 121 may vacuum-adsorb the lead 30 on the table 111 of the supply buffer 110. In more detail, the adsorption part 121 may include a close-contact part 121a in close contact with a top surface of the lead 30, and a support plate 121b on which the close-contact part 121a is suspended and supported. The close-contact part 121a may be communicated with a flexible pipe connected to a pump (not shown) that generates negative pressure.

The elevation actuator 122 may elevate the adsorption part 121 in a vertical direction. The elevation actuator 122 may be connected to the adsorption part 121, more particularly to the support plate 121b.

The elevation actuator 122 may allow the adsorption part 121 to ascend so as to pick up the lead 30 from the table 111, or allow the adsorption part 121 to descend so as to load the lead 30 on the seating part 150.

The uniaxial actuator 123 may be connected to the elevation actuator 122 and move the elevation actuator 122 horizontally in the first direction. In more detail, the uniaxial actuator 123 may include a connection body 123a connected to the elevation actuator 122, and a guide 123b that guides movement of the connection body 123a and extends in the first direction. The detailed configuration and operation of the uniaxial actuator 123 are the well-known art and thus, the detailed description thereof will be omitted.

Thus, the adsorption part 121 may move horizontally in the first direction together with the elevation actuator 122. The adsorption part 121 may pick up the lead 30 from the table 111 of the supply buffer 110 and move in the first direction by the uniaxial actuator 123 so as to load the lead on the seating part 150.

The support frame 130 may include a frame body 131 that supports the uniaxial actuator 123 of the loading device 120, and a pillar 132 that supports the horizontal frame body 131. The frame body 131 may be elongated in a direction parallel to the uniaxial actuator 123 of the loading device 120, i.e., in the first direction. The pillar 132 may be provided in plurality so as to stably support the frame body 131.

The supply buffer 110 may be disposed to pass below the frame body 131. The adsorption part 121 and the elevation actuator 122 of the loading device 120 may be disposed at one side in a width direction of the frame body 131.

The lead 30 transferred by the loading device 120 is seated on the seating part 150. The seating part 150 may be horizontally disposed.

The alignment mechanism 151 adjusts the seating part 150 so as to align the lead 30. The alignment mechanism 151 moves the seating part 150 horizontally and rotate around a vertical axis.

In more detail, the alignment mechanism 151 may include a rotation motor 152 that rotates the seating part 150 around the vertical axis, and an orthogonal robot 153 that moves the rotation motor 152 horizontally in the first direction and in the second direction.

The rotation motor 152 may be disposed below the seating part 150 and connected to the seating part 150. The rotation motor 152 may precisely adjust an angle of the seating part 150. For example, the rotation motor 152 may be a servo motor.

The orthogonal robot 153 may include a mounting part 153a, on which the rotation motor 152 is mounted, a first guide 153b, which guides movement of the mounting part 153a and is elongated in one direction of the first direction and the second direction, and a second guide 153c which guides movement of the first guide 153b and is elongated in the other direction of the first direction and the second direction. Thus, the seating part 150 may move in the first direction and in the second direction together with the rotation motor 152.

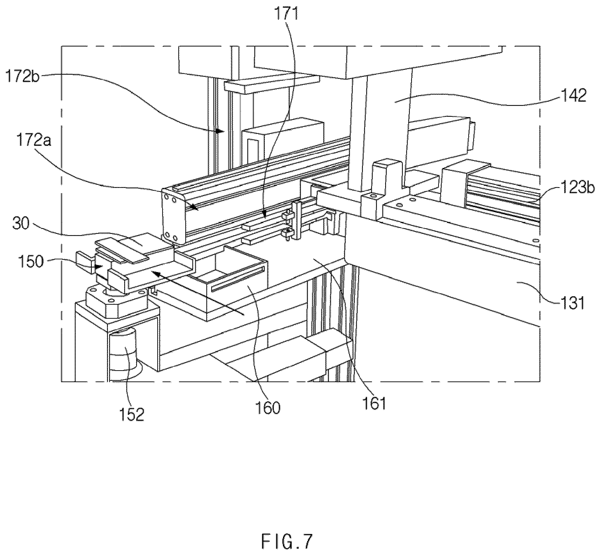

The seating part 150 may move, by the alignment mechanism 151, between a standby position (see FIG. 6) disposed below the vision sensor 140, and a supply position (see FIG. 7) spaced apart from the standby position in the first direction. That is, the alignment mechanism 151, more particularly the orthogonal robot 153, may reciprocate the seating part 150 between the standby position and the supply position. FIG. 2 illustrates a state in which the seating part 150 is disposed at the standby position.

In more detail, when the seating part 150 is disposed at the standby position, the vision sensor 140 may photograph the lead 30 on the seating part 150, and the alignment mechanism 151 may adjust the seating part 150 so as to align the lead 30 on the basis of vision data photographed by the vision sensor 140.

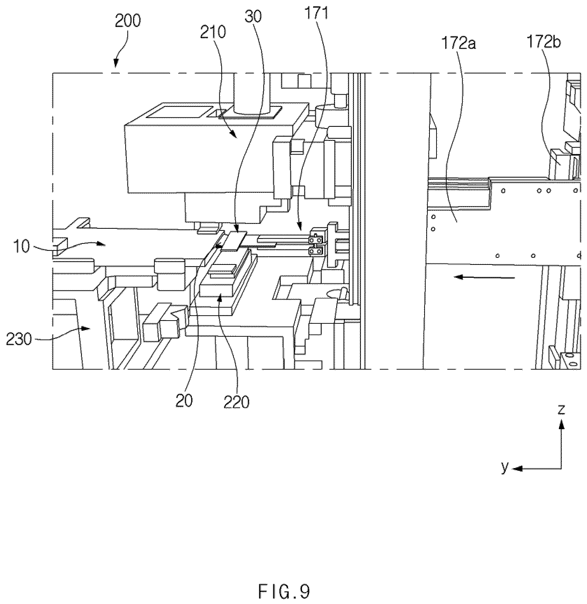

When the alignment of the lead 30 is completed, the alignment mechanism 151 may move the seating part 150 by a preset distance in the first direction, and the seating part 150 may reach the supply position. That is, the supply position is not a fixed position, but may vary slightly according to the alignment of the lead 30. When the seating part 150 moves to the supply position, the supply device 170 may pick up the lead 30 on the seating part 150 so as to supply the lead 30 to a position at which the lead 30 is connected to the electrode tab 20 of an electrode assembly 10 (see FIG. 9).

The vision sensor 140 photographs the lead 30 at an upper side of the seating part 150. The vision sensor 140 may be disposed above the seating part 150 that is the standby position. For example, the vision sensor 140 may include a camera.

The vision sensor 140 may be supported by the frame body 131 of the support frame 130 described above. In more detail, a connection part 142 connected to the vision sensor 140 may be coupled to the frame body 131.

The supply device 170 may be disposed to be spaced apart from the loading device 120 in the first direction. That is, the supply device 170 may be disposed at a side opposite to the loading device 120 with the seating part 150 therebetween.

The supply device 170 may include a gripper 171 that holds the lead 30, and an orthogonal robot 172 that moves the gripper 171.

The gripper 171 may hold the lead 30 seated on the seating part 150. In more detail, the gripper 171 may hold the lead 30 on the seating part 150 when the seating part 150 is disposed at the supply position (see FIG. 7) described above.

For example, the gripper 171 may include a pair of holding parts spaced apart from each other in an upward-downward direction, and an actuator that changes a distance between the pair of holding parts. In this case, the lead 30 may be held between the pair of holding parts.

The orthogonal robot 172 may include a first guide 172a that guides movement of the gripper 171 and is elongated in the second direction, and a second guide 172b that guides movement of the first guide 172a and is elongated in the vertical direction. The orthogonal robot 172 may further include a third guide 172c that guides movement of the second guide 172b and is elongated in the second direction. Thus, the orthogonal robot 172 may move the gripper 171 in the second direction and in the vertical direction.

The orthogonal robot 172 may move the gripper 171 in the second direction so that the lead 30 on the seating part 150 is inserted between the pair of holding parts of the gripper 171. In this regard, a groove that prevents an interference to the gripper 171 may be defined in the seating part 150.

The orthogonal robot 172 may allow the gripper 171 holding the lead 30 to ascend so as to pick up the lead 30 from the seating part 150. In a state in which the gripper 171 picks up the lead 30, the orthogonal robot 172 may allow the gripper 171 to move and descend in the second direction so as to supply the lead 30 to the position at which the lead 30 is connected to the electrode tab 20 (see FIG. 9).

The lead supply system 100 may further include a collecting box 160 in which the lead 30 defective or inappropriate is collected.

In more detail, if the vision sensor 140 detects a defect or inappropriateness of the lead 30 when the seating part 150 is disposed at the standby position, the supply device 170 may pick up and drop the lead 30 into the collecting box 160 when the seating part 150 is disposed at the supply position. Thus, the defective or inappropriate lead 30 may be prevented from being supplied to the position at which the lead 30 is connected to the electrode tab 20 (see FIG. 9).

The collecting box 160 may have a top surface opened. The collecting box 160 may be disposed in a lateral direction of the supply device 170. In more detail, the collecting box 160 may be disposed below a point in a movement path of the gripper 171. Thus, when the gripper 171 releases the lead 30 from above the collecting box 160, the lead 30 may be dropped into the collecting box 160.

The collecting box 160 may be supported by a support frame 161 at a height similar to or a slightly lower than the height of the seating part 150. Thus, the lead 30 released from the gripper 171 may stably enter the collecting box 160.

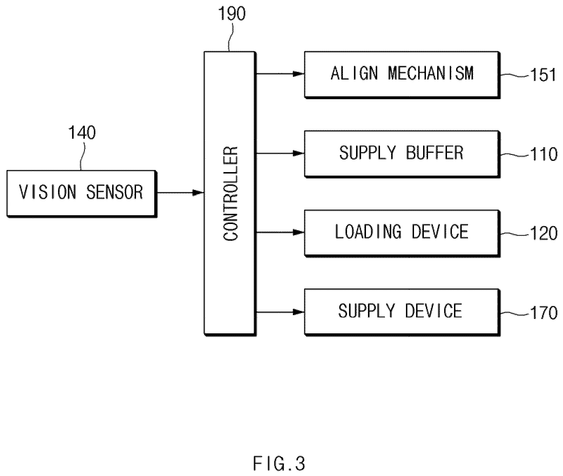

FIG. 3 is a control block diagram of the lead supply system according to an embodiment of the present invention.

The lead supply system 100 according to an embodiment of the present invention may further include a controller 190. The controller 190 may include at least one processor.

The controller 190 may control an overall operation of the lead supply system 100.

The controller 190 may control the supply buffer 110, the loading device 120, and the supply device 170.

The controller 190 may communicate with vision sensor 140 to receive the vision data photographed by the vision sensor 140, and may control the alignment mechanism 151 to align the lead 30 on the basis of the vision data. In more detail, the controller 190 may analyze the vision data to extract an outline of the lead 30, and generate a control command for matching the outline with a predetermined position to deliver the control command to the alignment mechanism 151.

The controller 190 may determine a defect and/or inappropriateness of the lead 30 on the basis of the vision data photographed by the vision sensor 140.

In one example, when one lead 30 is below a predetermined specification or detected to be broken, the one lead 30 may be determined as a defect.

In another example, when the material of one lead 30 does not match the polarity of the electrode tab 20 (see FIG. 9), the one lead 30 may be determined as inappropriateness. In more detail, the controller 190 may analyze the vision data to determine the material of the lead 30 on the basis of the color property (e.g., chroma) of the lead 30, and may determine whether the material of the lead 30 matches polarity information of the electrode tab 20. In this regard, the electrode tab 20 of a negative electrode may match the lead 30 having a nickel or copper material, and the electrode tab 20 of a positive electrode may match the lead 30 including an aluminum material.

When the lead 30 is determined as a defect or inappropriateness, the controller 190 may control the supply device 170 to collect the lead 30 in the collecting box 160. In contrast, when the lead 30 is determined to be normal, the controller 190 may control the supply device 170 to supply the lead 30 to the position at which the lead 30 is connected to the electrode tab 20.

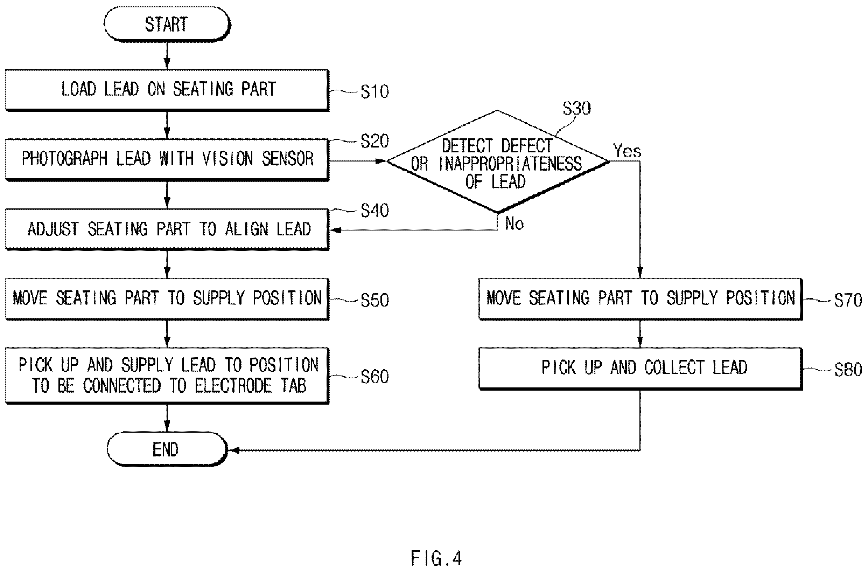

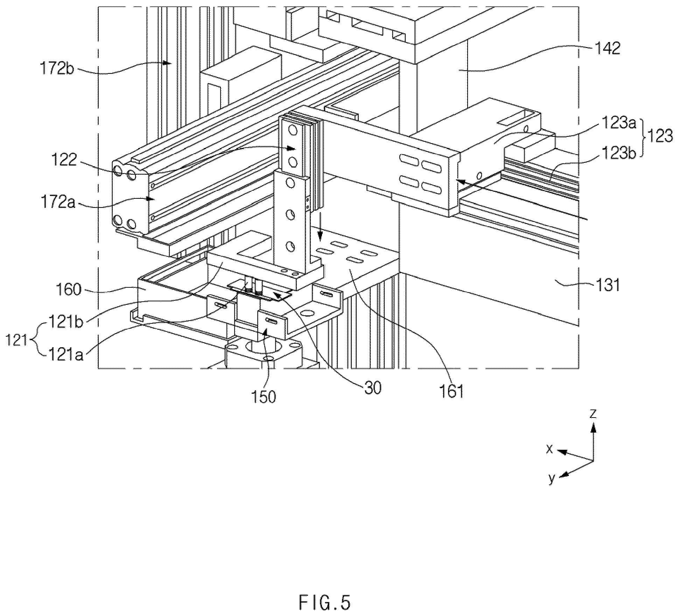

FIG. 4 is a flowchart of a method for controlling a lead supply system according to an embodiment of the present invention. FIGS. 5 to 9 are views for explaining operations of the lead supply system according to an embodiment of the present invention.

A method for controlling a lead supply system according to an embodiment of the present invention (hereinafter referred to as a "control method") includes a loading process (S10), a sensing process (S20), an alignment process (S40), and a supply process (S60). The control method may further include a moving process (S50 or S70) and a collection process (S80).

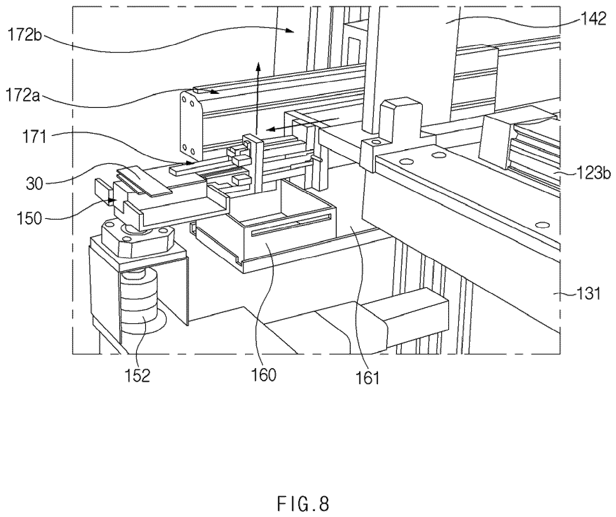

FIG. 5 is a view for explaining the loading process (S10). FIG. 6 is a view for explaining the sensing process (S20) and the alignment process (S40). FIG. 7 is a view for explaining the moving process (S50 or S70). FIG. 8 is a view for explaining a process in which a lead 30 is picked up in the supply process (S60). FIG. 9 is a view for explaining a process in which the lead 30 moves to a position, at which the lead 30 is connected to an electrode tab 20, in the supply process (S60).

Hereinafter, the respective operations will be described in more detail.

The loading process (S10) is a process of loading the lead 30 on the seating part 50.

Referring FIGS. 2 and 5, the adsorption part 121 of the loading device 120 may ascend in a state in which the adsorption part 121 adsorbs the lead 30 on the table 111 of the supply buffer 110, and move and descend in the first direction so as to load the lead 30 on the seating part 150.

Here, the seating part 150 may be a standby position disposed below the vision sensor 140. That is, the adsorption part 121 may move between the seating part 150 and the vision sensor 140 so as to load the lead 30 on the seating part 150.

The sensing process (S20) is a process of photographing the lead 30 on the seating part 150 by the vision sensor 140.

Referring FIGS. 2 and 6, the adsorption part 121 of the loading device 120 may return in the first direction so as to pickup the lead 30 on the supply buffer 110. Thus, the adsorption part 121 is not be disposed between the seating part 150 and the vision sensor 140, and the vision sensor 140 may easily photograph the lead 30 on the seating part 150.

As described above, the controller 190 may determine a defect and/or inappropriateness of the lead 30 on the basis of the vision data photographed by the vision sensor 140 (S30). In this regard, when the lead 30 is determined to be normal, the alignment process (S40) may be performed, and when the lead 30 is determined as a defect and/or inappropriateness, the collection process (S80) to be described later may be performed.

The alignment process (S40) is a process of adjusting the seating part 150 to align the lead 30 on the basis of the vision data photographed by the vision sensor 140.

The controller 190 (see FIG. 3) may analyze the vision data photographed in the previous sensing process (S20) to generate a control command for aligning the lead 30 at a predetermined position and deliver the control command to the alignment mechanism 151. According to the control command, the alignment mechanism 151 may move the seating part 150 in the horizontal direction, and may rotate the seating part 150 at a predetermined angle around a vertical axis. In more detail, the seating part 150 may rotate at the predetermined angle by the rotation motor 152 and move by the orthogonal robot 153 in the first direction and in the second direction.

The moving process (S50 or S70) may be a process of moving the seating part 150 from the standby position to a supply position. In more detail, referring FIGS. 2 and 7, the seating part 150 may move in the first direction by the alignment mechanism 151, more particularly by the orthogonal robot 153.

The moving process (S50 or S70) may be performed between the alignment process (S40) and the supply process (S60) (S50), or performed before the collection process (S80) (S70). That is, the supply process (S60) and the collection process (S80) may be performed in a state in which the seating part 150 is disposed at the supply position.

The supply process (S60) is a process of picking up the lead 30 from the seating part 150 to move the lead 30 to a position at which the lead 30 is connected to the electrode tab 20.

Referring FIGS. 2, 8, and 9, the supply process (S60) may include picking up the lead 30 seated on the seating part 150 by the gripper 171 of the supply device 170, and moving the gripper 171 horizontally in the second direction.

The gripper 171 of the supply device 170 may ascend in a state in which the gripper 171 holds the lead 30 on the seating part 150, and move and descend in the second direction so as to transfer the lead 30 to the position at which the lead 30 is connected to the electrode tab 20.

In this regard, the electrode assembly 10 provided with the electrode tab 20 may be sequentially supplied to a preset bonding position by a transfer system 200. In more detail, the transfer system 200 may include a table 230, which moves horizontally (e.g., in the first direction) in a state in which the electrode assembly 10 is disposed thereon, a bonding unit 210, which bonds the electrode tab 20 to the lead 30, and a support part 220 which supports the electrode tab 20 and the lead 30 from a lower side.

When the table 230 is disposed at the bonding position, the electrode tab 20 may be disposed above the support part 220 and the gripper 171 may supply the lead 30 so as to be in contact with or adjacent to the electrode tab 20. In such a state, the bonding unit 210 may descend so that the electrode tab 20 and the lead 30 are pressed and bonded to each other between the bonding unit 210 and the support part 220.

For example, the bonding unit 210 may include a mask jig and a laser unit, and the electrode tab 20 and the lead 30 may be laser welded to each other. Configurations and operations for performing the laser welding are the well-known art and thus, the detailed description thereof will be omitted.

When the bonding of the electrode tab 20 to the lead 30 is completed, the gripper 171 may release the lead 30 and return in the second direction.

After the alignment process (S40) is performed, the seating part 150, on which the lead 30 is seated, moves by a preset distance in the first direction in the moving process (S50), and the gripper 171 holding the lead 30 moves by a preset distance in the second direction in the supply process (S60), so that the lead 30 after the alignment may be supplied to a predetermined position at which the lead 30 is connected to the electrode tab 20.

Accordingly, the manufacturing quality of the electrode assembly 10 may be improved. There is also an advantage that even when the specification, etc., of the lead 30 to be stocked in the supply buffer 110 changes, the alignment may be automatically performed without stopping the equipment.

When the lead 30 is determined as a defect and/or inappropriateness in the sensing process (S20), the collection process (S80) may be performed. That is, the collection process (S80) may be a process of picking up and collecting the lead 30 when the lead 30 is determined as a defect and/or inappropriateness on the basis of the vision data photographed by the vision sensor 40.

In more detail, the gripper 171 may pick up the lead 30 on the seating part 150 that is the supply position, so as to collect the lead 30 in the collecting box 160 instead of supplying the lead 30 to the position at which the lead 30 is connected to the electrode tab 20. Accordingly, the defective or inappropriate lead 30 may be prevented from being provided in the electrode assembly 10, and the quality of the electrode assembly 10 may be further improved.

Alternatively, even when the lead 30 is determined as a defect and/or inappropriateness, it may be possible to perform the alignment process (S40) unconditionally and then, perform the collection process (S80).

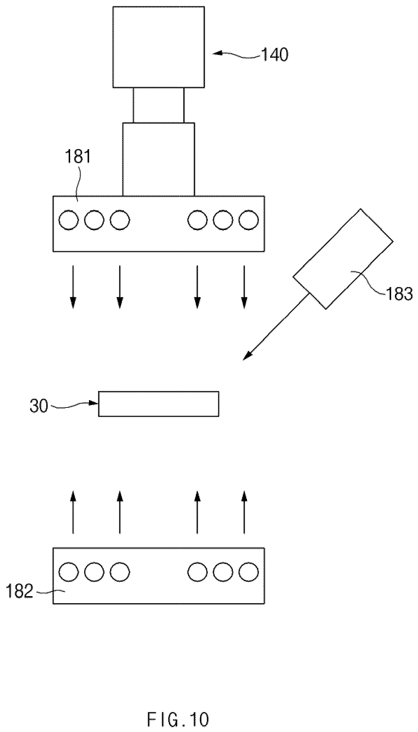

FIG. 10 is a view for explaining a lead supply system according to another embodiment of the present invention.

The lead supply system according to this embodiment is the same as an embodiment described above except that a plurality of light units 181, 182 and 183 are further included. Thus, duplicate description is omitted and the description will be focused on differences.

Referring to FIGS. 2 and 10 together, the lead supply system according to this embodiment may further include at least one of an overhead light unit 181, which emits light onto a top surface of the lead 30 on the seating part 150, or a backlight unit 182 which emits the light onto a bottom surface of the lead 30 on the seating part 150. The lead supply system may further include a concentrative light unit 183.

The overhead light unit 181, the backlight unit 182, and the concentrative light unit 183 may emit light toward the lead 30 when the vision sensor 140 photographs the lead 30 on the seating part 150. That is, the sensing process (S20) (see FIG. 4) described above may be performed in a state in which the light is emitted toward the lead 30.

The overhead light unit 181 may be a coaxial light unit. The overhead light unit 181 may be disposed above the seating part 150, particularly above the seating part 150 that is a standby position. That is, the overhead light unit 181 may be provided in the vision sensor 140 or disposed to be adjacent to the vision sensor 140. The overhead light unit 181 may be connected to the connection part 142 together with the vision sensor 140 so as to be supported by the frame body 131.

The backlight unit 182 may be disposed below the seating part 150, particularly below the seating part 150 that is the standby position. Alternatively, the backlight unit 182 may be provided in the seating part 150.

Due to the overhead light unit 181, shadows may be prevented from occurring on the lead 30 due to peripheral equipment, etc., and light reflection may be prevented from excessively occurring on the lead 30. Due to the backlight unit 182, an outline of the lead 30 may become clearer.

Thus, due to the overhead light unit 181 and the backlight unit 182, an accurate outline of the lead 30 may be detected from the vision data photographed by the vision sensor 140, and the lead 30 may be more precisely aligned.

The concentrative light unit 183 may be provided toward the seating part 150 and concentratively emit light onto a partial area on the lead 30. That is, the concentrative light unit 183 may concentratively emit light onto a narrower area on the top surface of the lead 30 when compared to the overhead light unit 181. The area onto which the light of the concentrative light unit 183 is concentratively emitted may be disposed inward from the outline of the lead 30 so as not to interfere with the detection of the outline of the lead 30.

The concentrative light unit 183 may be disposed to be adjacent to the vision sensor 140. The concentrative light unit 183 may be connected to the connection part 142 together with the vision sensor 140 so as to be supported by the frame body 131. The concentrative light unit 183 may be disposed to be inclined.

Due to the concentrative light unit 183, the color property (e.g., chroma) of the lead 30 and the material according to the color property may be accurately determined on the basis of the vision data photographed by the vision sensor 140. Thus, it may be more accurately determined whether the material of the lead 30 matches polarity information of the electrode tab 20.

### [Description of the Symbols]

| | | | |
|---|---|---|---|
| 10: | Electrode assembly | 20: | Electrode tab |
| 30: | Lead | 100: | Lead supply system |
| 110: | Supply buffer | 120: | Loading device |
| 130: | Support frame | 140: | Vision sensor |
| 150: | Seating part | 151: | Alignment mechanism |
| 152: | rotation motor | 153: | Orthogonal robot |
| 160: | Collecting box | 170: | Supply device |
| 171: | Gripper | 172: | Orthogonal robot |
| 181: | Overhead light unit | 182: | Backlight unit |
| 183: | Concentrative light unit | 190: | Controller |

## Claims

1. A lead supply system (100) configured to supply a lead (30) so as to be connected to an electrode tab (20), the lead supply system (100) comprising:
a seating part (150) on which the lead (30) is seated; and
a vision sensor (140) configured to photograph the lead (30) at an upper side of the seating part (150); **characterized by**
a supply device (170) configured to pick up the lead (30) from the seating part (150) so as to supply the lead (30) to a position at which the lead (30) is connected to the electrode tab (20), and
an alignment mechanism (151) configured to adjust the seating part (150) so as to align the lead (30) on the basis of vision data photographed by the vision sensor (140);
wherein the alignment mechanism (151) moves the seating part (150) horizontally or rotates the seating part (150) around a vertical axis to align the lead (30).

2. The lead supply system (100) of claim 1, further comprising a collecting box (160) in which the lead (30) is collected by the supply device (170) when the lead (30) is determined as a defect or inappropriateness on the basis of the vision data.

3. The lead supply system (100) of claim 1, wherein the alignment mechanism (151) comprises:
a rotation motor (152) disposed below the seating part (150) and configured to rotate the seating part (150) around a vertical axis; and
an orthogonal robot (153) configured to move the rotation motor (152) horizontally in first and second directions perpendicularly crossing each other.

4. The lead supply system (100) of claim 1, wherein the alignment mechanism (151) moves the seating part (150) between a standby position disposed below the vision sensor (140) and a supply position spaced apart from the standby position in a first direction, and
the supply device (170) picks up the lead (30) when the seating part (150) is disposed at the supply position.

5. The lead supply system (100) of claim 4, wherein the supply device (170) comprises:
a gripper (171) configured to hold the lead (30); and
an orthogonal robot (172) configured to move the gripper (171) in a second direction perpendicularly crossing the first direction and in a vertical direction.

6. The lead supply system (100) of claim 4, further comprising a loading device (120) configured to load the lead (30) on the seating part (150) when the seating part (150) is disposed at the standby position.

7. The lead supply system (100) of claim 6, wherein the loading device (120) comprises:
an adsorption part (121) configured to adsorb the lead (30) at an upper side;
an elevation actuator (122) configured to elevate the adsorption part; and
a uniaxial actuator (123) configured to move the elevation actuator horizontally.

8. The lead supply system (100) of claim 1, further comprising at least one of an overhead light unit (181) configured to emit light onto the lead (30) from above the seating part (150), or a backlight unit (182) provided in the seating part (150) or disposed below the seating part (150).

9. The lead supply system (100) of claim 8, further comprising a concentrative light unit (183) provided toward the seating part (150) and configured to concentratively emit light onto a partial area on the lead (30).

10. A method for controlling a lead supply system (100) that supplies a lead (30) so as to be connected to an electrode tab (20), the method comprising:
a loading process of loading the lead (30) on a seating part (150); and
a sensing process of photographing the lead (30) on the seating part (150) by a vision sensor (140); **characterized by**
an alignment process of adjusting the seating part (150) to align the lead (30) on the basis of vision data photographed by the vision sensor (140); and
a supply process of picking up the lead (30) from the seating part (150) to move the lead (30) to a position at which the lead (30) is connected to the electrode tab (20),
wherein the alignment process includes moving the seating part (150) horizontally or rotating the seating part (150) around a vertical axis by an alignment mechanism (151) to align the lead (30).

11. The method of claim 10, further comprising a collection process of picking up and collecting the lead (30) when the lead (30) is determined as a defect or inappropriateness on the basis of the vision data.

12. The method of claim 10, further comprising a moving process of moving the seating part (150) in a first direction between the alignment process and the supply process.

13. The method of claim 12, wherein the supply process comprises:
picking up the lead (30) seated on the seating part (150) by a gripper (171); and
moving the gripper (171) horizontally in a second direction perpendicularly crossing to the first direction.

14. The method of claim 10, wherein the sensing process is performed in a state in which light is emitted toward the lead (30).

## Patentansprüche

1. Leitungszuführungssystem (100) zum Zuführen einer Leitung (30), um mit einer Elektrodenlasche (20) verbunden zu werden, wobei das Leitungszuführungssystem (100) folgendes umfasst:
einen Sitzteil (150), auf dem die Leitung (30) sitzt; und
einen Vision-Sensor (140) zum Fotografieren der Leitung (30) an einer Oberseite des Sitzteils (150); **gekennzeichnet durch**
eine Zuführvorrichtung (170) zum Aufnehmen der Leitung (30) vom Sitzteil (150), um die Leitung (30) einer Position zuzuführen, an der die Leitung (30) mit der Elektrodenlasche (20) verbunden ist, und
einen Ausrichtungsmechanismus (151) zum Einstellen des Sitzteils (150), um die Leitung (30) auf der Grundlage von vom Vision-Sensor (140) fotografierten Vision-Daten auszurichten;
wobei der Ausrichtungsmechanismus (151) das Sitzteil (150) horizontal bewegt oder das Sitzteil (150) um eine vertikale Achse dreht, um die Leitung (30) auszurichten.

2. Leitungszuführungssystem (100) nach Anspruch 1, ferner umfassend einen Sammelbehälter (160), in dem die Leitung (30) von der Zuführvorrichtung (170) gesammelt wird, wenn die Leitung (30) auf der Grundlage der Vision-Daten als defekt oder ungeeignet bestimmt wird.

3. Leitungszuführungssystem (100) nach Anspruch 1, wobei der Ausrichtungsmechanismus (151) folgendes umfasst:
einen Rotationsmotor (152), der unter dem Sitzteil (150) angeordnet und zum Drehen des Sitzteils (150) um eine vertikale Achse ausgelegt ist; und
einen orthogonalen Roboter (153) zum horizontalen Bewegen des Rotationsmotors (152) in einer ersten und einer zweiten Richtung, die einander senkrecht kreuzen.

4. Leitungszuführungssystem (100) nach Anspruch 1, wobei der Ausrichtungsmechanismus (151) das Sitzteil (150) zwischen einer unter dem Vision-Sensor (140) angeordneten Bereitschaftsstellung und einer von der Bereitschaftsstellung in einer ersten Richtung beabstandeten Zuführungsstellung bewegt, und
wobei die Zuführvorrichtung (170) die Leitung (30) aufnimmt, wenn das Sitzteil (150) an der Zuführungsstellung angeordnet ist.

5. Leitungszuführungssystem (100) nach Anspruch 4, wobei die Zuführvorrichtung (170) folgendes umfasst:
einen Greifer (171) zum Halten der Leitung (30); und
einen orthogonalen Roboter (172) zum Bewegen des Greifers (171) in einer zweiten Richtung, die die erste Richtung senkrecht kreuzt, und in einer vertikalen Richtung.

6. Leitungszuführungssystem (100) nach Anspruch 4, ferner umfassend eine Ladevorrichtung (120) zum Laden der Leitung (30) auf das Sitzteil (150), wenn das Sitzteil (150) in der Bereitschaftsstellung angeordnet ist.

7. Leitungszuführungssystem (100) nach Anspruch 6, wobei die Ladevorrichtung (120) folgendes umfasst:
ein Adsorptionsteil (121) zum Adsorbieren der Leitung (30) an einer Oberseite;
ein Höhenstellglied (122) zum Anheben des Adsorptionsteils; und
ein uniaxiales Stellglied (123) zum horizontalen Bewegen des Höhenstellglieds.

8. Leitungszuführungssystem (100) nach Anspruch 1, ferner umfassend eine Überkopfbeleuchtungseinheit (181) zum Emittieren von Licht auf die Leitung (30) von oberhalb des Sitzteils (150) und/oder eine Hintergrundbeleuchtungseinheit (182), die in dem Sitzteil (150) vorgesehen oder unter dem Sitzteil (150) angeordnet ist.

9. Leitungszuführungssystem (100) nach Anspruch 8, ferner umfassend eine konzentrische Beleuchtungseinheit (183), die in Richtung des Sitzteils (150) vorgesehen und zum konzentrischen Emittieren von Licht auf einen Teilbereich auf der Leitung (30) konfiguriert ist.

10. Verfahren zum Steuern eines Leitungszuführungssystems (100), das eine Leitung (30) zuführt, um mit einer Elektrodenlasche (20) verbunden zu werden, wobei das Verfahren folgendes umfasst:
einen Ladevorgang zum Laden der Leitung (30) auf ein Sitzteil (150); und
einen Erfassungsvorgang zum Fotografieren der Leitung (30) auf dem Sitzteil (150) durch einen Vision-Sensor (140); **gekennzeichnet durch**
einen Ausrichtungsvorgang zum Einstellen des Sitzteils (150), um die Leitung (30) auf der Grundlage von vom Vision-Sensor (140) fotografierten Vision-Daten auszurichten; und
einen Zuführvorgang zum Aufnehmen der Leitung (30) vom Sitzteil (150), um die Leitung (30) zu einer Position zu bewegen, an der die Leitung (30) mit der Elektrodenlasche (20) verbunden ist,
wobei der Ausrichtungsvorgang das horizontale Bewegen des Sitzteils (150) oder das Drehen des Sitzteils (150) um eine vertikale Achse durch einen Ausrichtungsmechanismus (151) beinhaltet, um die Leitung (30) auszurichten.

11. Verfahren nach Anspruch 10, ferner umfassend einen Sammelvorgang zum Aufnehmen und Sammeln der Leitung (30), wenn die Leitung (30) auf der Grundlage der Vision-Daten als defekt oder ungeeignet bestimmt wird.

12. Verfahren nach Anspruch 10, ferner umfassend einen Bewegungsvorgang zum Bewegen des Sitzteils (150) in einer ersten Richtung zwischen dem Ausrichtungsvorgang und dem Zuführvorgang.

13. Verfahren nach Anspruch 12, wobei der Zuführvorgang folgendes umfasst:
Aufnehmen der auf dem Sitzteil (150) sitzenden Leitung (30) durch einen Greifer (171); und
horizontales Bewegen des Greifers (171) in einer zweiten Richtung, die die erste Richtung senkrecht kreuzt.

14. Verfahren nach Anspruch 10, wobei der Erfassungsvorgang in einem Zustand durchgeführt wird, in dem Licht in Richtung der Leitung (30) emittiert wird.

## Revendications

1. Système d'agencement d'un conducteur (100) configuré pour agencer un conducteur (30) afin qu'il soit connecté à une languette d'électrode (20), le système d'agencement d'un conducteur (100) comprenant :
un élément d'appui (150) sur lequel repose le conducteur (30) ; et
un capteur de vision (140) configuré pour photographier le conducteur (30) sur un côté supérieur de l'élément d'appui (150) ; **caractérisé par**
un dispositif d'amenée (170) configuré pour prélever le conducteur (30) de l'élément d'appui (150) afin d'amener le conducteur (30) dans une position où le conducteur (30) est connecté à la languette d'électrode (20), et
un mécanisme d'alignement (151) configuré pour ajuster l'élément d'appui (150) afin d'aligner le conducteur (30) avec la base des données de vision photographiées par le capteur de vision (140) ;
le mécanisme d'alignement (151) déplaçant horizontalement l'élément d'appui (150) ou tournant l'élément d'appui (150) autour d'un axe vertical pour aligner le conducteur (30).

2. Système d'agencement d'un conducteur (100) selon la revendication 1, comprenant en outre un boîtier de collecte (160) dans lequel le conducteur (30) est collecté par le dispositif d'amenée (170) lorsque le conducteur (30) est établi comme étant un défaut ou une inadéquation d'après les données de vision.

3. Système d'agencement d'un conducteur (100) selon la revendication 1, le mécanisme d'alignement (151) comprenant :
un moteur de rotation (152) disposé sous l'élément d'appui (150) et configuré pour faire tourner l'élément d'appui (150) autour d'un axe vertical ; et
un robot orthogonal (153) configuré pour déplacer horizontalement le moteur de rotation (152) dans les première et deuxième directions, s'entrecroisant perpendiculairement.

4. Système d'agencement d'un conducteur (100) selon la revendication 1, le mécanisme d'alignement (151) déplaçant l'élément d'appui (150) entre une position d'attente disposée sous le capteur de vision (140) et une position d'agencement espacée de la position d'attente dans une première direction, et
le dispositif d'agencement (170) prélevant le conducteur (30) lorsque l'élément d'appui (150) est disposé dans la position d'agencement.

5. Système d'agencement d'un conducteur (100) selon la revendication 4, le dispositif d'agencement (170) comprenant :
un préhenseur (171) configuré pour tenir le conducteur (30) ; et
un robot orthogonal (172) configuré pour déplacer le préhenseur (171) dans une deuxième direction croisant perpendiculairement la première direction dans le sens vertical.

6. Système d'agencement d'un conducteur (100) selon la revendication 4, comprenant en outre un dispositif de chargement (120) configuré pour charger le conducteur (30) sur l'élément d'appui (150) lorsque l'élément d'appui (150) est disposé en position d'attente.

7. Système d'agencement d'un conducteur (100) selon la revendication 6, le dispositif de chargement (120) comprenant :
un élément d'adsorption (121) configuré pour adsorber le conducteur (30) sur un côté supérieur ;
un actionneur de levage (122) configuré pour lever l'élément d'adsorption ; et
un actionneur mono-axial (123) configuré pour déplacer l'actionneur de levage dans le sens horizontal.

8. Système d'agencement d'un conducteur (100) selon la revendication 1, comprenant en outre au moins un dispositif d'éclairage surélevé (181) configuré pour émettre de la lumière sur le conducteur (30) d'au-dessus de l'élément d'appui (150), ou un dispositif de rétroéclairage (182) agencé dans l'élément d'appui installé (150) ou disposé sous l'élément d'appui (150).

9. Système d'agencement d'un conducteur (100) selon la revendication 8, comprenant en outre un dispositif d'éclairage concentrateur (183) agencé vers l'élément d'appui (150), et configuré pour émettre un éclairage concentré sur une zone partielle du conducteur (30).

10. Procédé de commande d'un système d'agencement d'un conducteur (100) alimentant un conducteur (30) afin qu'il soit connecté à une languette d'électrode (20), le procédé comprenant :
un processus de chargement consistant à charger le conducteur (30) sur un élément d'appui (150) ; et
un processus de détection consistant à photographier le conducteur (30) sur l'élément d'appui (150) à l'aide d'un capteur de vision (140) ; **caractérisé par**
un processus d'alignement (150) comportant d'ajustage de l'élément d'appui (150) pour aligner le conducteur (30) en fonction des données de vision photographiées par le capteur de vision (140) ; et
un processus d'agencement comportant le prélèvement du conducteur (30) depuis l'élément d'appui (150) afin de déplacer le conducteur (30) dans une position dans laquelle le conducteur (30) est connecté à la languette d'électrode (20), et
le processus d'alignement comportant le déplacement horizontal de l'élément d'appui (150) ou la rotation de l'élément d'appui (150) autour d'un axe vertical à l'aide d'un mécanisme d'alignement (151) pour aligner le conducteur (30).

11. Procédé selon la revendication 10, comprenant en outre un processus de collecte avec prélèvement et collecte du conducteur (30), le conducteur (30) étant établi comme étant un défaut ou une inadéquation d'après les données de vision.

12. Procédé selon la revendication 10 comprenant en outre un processus de déplacement consistant à déplacer l'élément d'appui (150) dans une première direction entre le processus d'alignement et le processus d'agencement.

13. Procédé selon la revendication 12, le processus d'agencement comprenant :
le prélèvement du conducteur (30) installé sur l'élément d'appui (150) à l'aide d'un préhenseur (171) ; et
le déplacement du préhenseur (171) horizontalement dans une deuxième direction croisant perpendiculairement la première.

14. Procédé selon la revendication 10, le processus de détection étant effectué dans un état où la lumière est émise vers le conducteur (30).
